# EUROPEAN PATENT APPLICATION

(11) **EP 1 882 870 A2**
(43) Date of publication of application: **30.01.2008**
(21) Application number: 07014678.2
(22) Date of filing: 26.07.2007
(51) Int. Cl.: F16H 61/22

(54) **Shift lever locking mechanism**

(30) Priority: 28.07.2006 US 460783
(71) Applicant: Dura Global Technologies, Inc., Rochester Hills, Michigan 48309 (US)
(72) Inventor: Howe, Brian Douglas, Shelby Township MI 48315 (US); Gibson, Jeffrey, Oakland Township MI 48306 (US); Choby, David A., Rochester MI 48306 (US)
(74) Representative: Coyle, Philip Aidan

(57) **Abstract**

A locking mechanism for a shift lever (22) includes a detent member (32) movable along a path, a stopper member (40) movable between a locking position and an unlocking position, and a cam member (42). A spring member (60) resiliently biases the stopper member toward the locking position. An electromagnetic solenoid (44) has a coil (46) fixed to the cam member and a core fixed to the stopper member. The electromagnetic solenoid permits relative movement between the stopper member and the cam member when the electromagnetic solenoid is unenergized and prevents relative movement between the stopper member and the cam member when the electromagnetic solenoid is energized. The cam member applies a force to the stopper member to move the stopper member toward the unlocking position in response to movement of the detent member when the electromagnetic solenoid is energized.

## Description

### CROSS-REFERENCE TO RELATED APPLICATIONS

Not Applicable

### STATEMENT REGARDING FEDERALLY SPONSORED RESEARCH

Not Applicable

### REFERENCE TO MICROFICHE APPENDIX

Not Applicable

### FIELD OF THE INVENTION

The present invention generally relates to shifter assemblies for controlling transmissions of motor vehicles and, more particularly, to a locking mechanism for locking a shift lever in a predetermined gear position against movement to other gear positions when predetermined conditions are present.

### BACKGROUND OF THE INVENTION

In a vehicle equipped with an automatic transmission, a shift lever is typically pivotable over a series of positions representative of transmission gears such as, for example, park (P), reverse (R), neutral (N), drive (D), and low gears (2, 1). The shift lever is operably connected to the motor vehicle transmission by a suitable mechanical and/or electronic operating linkage to effect actuation of the transmission to the selected gear when the shift lever is pivoted to the transmission gear's representative position. The shift lever is typically provided with a knob assembly having a detent member which releasably holds the shift lever in its current position to prevent inadvertent movement of the shift lever. The knob assembly typically includes a manually operable button which permits the operator to release the detent member and move the shift lever.

The shift lever can be provided with a locking mechanism which locks the shift lever in a predetermined gear position against movement to other gear positions when predetermined conditions are present. The lock mechanism thus disables the knob assembly so that the operator cannot move the shift lever under certain predetermined conditions. Typically, the lock mechanism prevents movement of the shift lever out of the park position unless a brake foot pedal is depressed and/or other desired conditions are present to reduce the likelihood of unattended or unintended movement or acceleration of the vehicle. These locking mechanisms typically have mechanically or electrically actuated devices which block movement of the detent member unless the predetermined conditions are met. These locking mechanisms, however, often generate undesirable levels of noise as they are activated and/or deactivated.

U.S. Patent No. 5,671,638, the disclosure of which is expressly incorporated herein in its entirety by reference, discloses a locking mechanism for a shift lever.

U.S. Patent No. 5,799,517, the disclosure of which is expressly incorporated herein in its entirety by reference, discloses another locking mechanism for a shift lever.

U.S. Patent No. 6,852,065, the disclosure of which is expressly incorporated herein in its entirety by reference, discloses another locking mechanism for a shift lever.

There is a never ending desire in the motor vehicle industry to reduce size, weight, and cost while retaining and/or obtaining desirable characteristics. Accordingly, there is a need in the art for an improved locking mechanism for a shift lever.

### SUMMARY OF THE INVENTION

The present invention provides a locking mechanism for a shift lever which addresses one or more problems of the related art. According to the present invention, a locking mechanism for a shift lever comprises, in combination, a detent member movable along a path, a stopper member movable between a locking position wherein the stopper member is within the path of the detent member and an unlocking position wherein stopper member is positioned to permit the detent member to move along the path, and a cam member. In one embodiment, a spring member resiliently biases the stopper member toward the locking position. An electromagnetic solenoid has a coil fixed to the cam member and a core fixed to the stopper member. The electromagnetic solenoid permits relative movement between the stopper member and the cam member when the electromagnetic solenoid is unenergized and prevents relative movement between the stopper member and the cam member when the electromagnetic solenoid is energized. The cam member applies a force to the stopper member to move the stopper member toward the unlocking position in response to movement of the detent member when the electromagnetic solenoid is energized.

According to another aspect of the present invention, a locking mechanism for a shift lever comprises, in combination, a detent member movable along a predetermined path, a stopper member movable between a locking position wherein the stopper member is within the path of the detent member to block movement of the detent member along at least a portion of the path and an unlocking position wherein stopper member is positioned to permit the detent member to move along the path, and a cam member. In one embodiment, a first spring member resiliently biases the stopper member toward the locking position and a second spring member resiliently biases the cam member away from the path. An electromagnetic solenoid has a coil and a core connecting the stopper member and the cam member. The electromagnetic solenoid permits relative movement between the stopper member and the cam member when the electromagnetic solenoid is unenergized and prevents relative movement between the stopper member and the cam member when the electromagnetic solenoid is energized. The cam member applies a force to the stopper member to move the stopper member toward the unlocking position in response to movement of the detent member along the path when the electromagnetic solenoid is energized.
The invention provides a locking mechanism for a shift lever according to claim 1, 13 or 17.

According to yet another aspect of the present invention, a locking mechanism for a shift lever comprises, in combination, a detent member movable along a predetermined path, a stopper member movable between a locking position wherein the stopper member is within the path of the detent member to block movement of the detent member along at least a portion of the path and an unlocking position wherein stopper member is positioned to permit the detent member to move along the path, and a cam member. In one embodiment, a spring member resiliently biases the stopper member toward the locking position. An electromagnetic solenoid has a coil and a core connecting the stopper member and the cam member. The cam member is unbiased by a spring member so that the cam member freely moves relative to the stopper member when the electromagnetic solenoid is unenergized. The electromagnetic solenoid prevents relative movement between the stopper member and the cam member when the electromagnetic solenoid is energized. The cam member applies a force to the stopper member to move the stopper member toward the unlocking position in response to movement of the detent member along the path when the electromagnetic solenoid is energized.

From the foregoing disclosure and the following more detailed description of various preferred embodiments it will be apparent to those skilled in the art that the present invention provides a significant advance in the technology and art of motor vehicle shift lever locking mechanisms. Particularly significant in this regard is the potential the invention affords for providing a high quality, reliable, quiet, low cost assembly which utilizes a relatively small amount of space. Additional features and advantages of various preferred embodiments will be better understood in view of the detailed description provided below.

### BRIEF DESCRIPTION OF THE DRAWINGS

These and further features of the present invention will be apparent with reference to the following description and drawings, wherein:
FIG. 1 is a perspective view of a shifter assembly having a locking mechanism according to the present invention;
FIG. 2 is an enlarged, fragmented elevational view, partially in cross-section, showing the locking mechanism of the shifter assembly of FIG. 1 according to a first embodiment of the invention;
FIG. 3 is an elevational view similar to FIG. 2 but wherein a knob assembly is actuated while an electromagnetic solenoid is unenergized;
FIG. 4 is an elevational view similar to FIGS. 2 and 3 but wherein the knob assembly is actuated while the electromagnetic solenoid is energized;
FIG. 5 is an enlarged, fragmented elevational view, partially in cross-section, showing a locking mechanism of the shifter assembly of FIG. 1 according to a second embodiment of the invention;
FIG. 6 is an elevational view similar to FIG. 5 but wherein the knob assembly is actuated while the electromagnetic solenoid is unenergized;
FIG. 7 is an elevational view similar to FIGS. 5 and 6 but wherein the knob assembly is actuated while the electromagnetic solenoid is energized.
FIG. 8 is an enlarged, fragmented elevational view, partially in cross-section, showing a locking mechanism of the shifter assembly of FIG. 1 according to a third embodiment of the invention;
FIG. 9 is an elevational view similar to FIG. 8 but wherein the knob assembly is actuated while the electromagnetic solenoid is unenergized;
FIG. 10 is an elevational view similar to FIGS. 8 and 9 but wherein the knob assembly is actuated while the electromagnetic solenoid is energized;
FIG. 11 is an enlarged, fragmented elevational view, partially in cross-section, showing a locking mechanism of the shifter assembly of FIG. 1 according to a fourth embodiment of the invention;
FIG. 12 is an elevational view similar to FIG. 11 but wherein the knob assembly is actuated while the electromagnetic solenoid is unenergized; and
FIG. 13 is an elevational view similar to FIGS. 10 and 11 but wherein the knob assembly is actuated while the electromagnetic solenoid is energized.

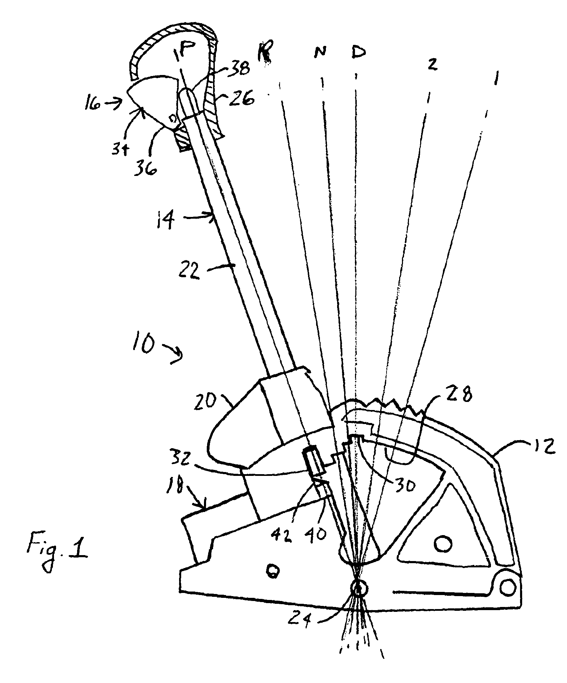

It should be understood that the appended drawings are not necessarily to scale, presenting a somewhat simplified representation of various preferred features illustrative of the basic principles of the invention. The specific design features of a locking mechanism for a shift lever as disclosed herein, including, for example, specific dimensions, orientations, locations, and shapes of the various components, will be determined in part by the particular intended application and use environment. Certain features of the illustrated embodiments have been enlarged or distorted relative to others to facilitate visualization and clear understanding. In particular, thin features may be thickened, for example, for clarity or illustration. All references to direction and position, unless otherwise indicated, refer to the orientation of the shifter assembly illustrated in the drawings. In general, up or upward generally refers to an upward direction within the plane of the paper in FIG. 1 and down or downward generally refers to a downward direction within the plane of the paper in FIG. 1. Also in general, fore or forward refers to a direction toward the front of the vehicle, that is, generally toward the left within the plane of the paper in FIG. 1 and aft or rearward refers to a direction toward the rear of the vehicle, that is, generally toward the right within the plane of the paper in FIG. 1.

### DETAILED DESCRIPTION OF CERTAIN PREFERRED EMBODIMENTS

It will be apparent to those skilled in the art, that is, to those who have knowledge or experience in this area of technology, that many uses and design variations are possible for the improved locking mechanism for a shift lever disclosed herein. The following detailed discussion of various alternative and preferred embodiments will illustrate the general principles of the invention with reference to a shift lever locking mechanism for a motor vehicle such as an automobile, sport utility vehicle (SUV), truck, or the like. Other embodiments suitable for other applications of the invention will be apparent to those skilled in the art given the benefit of this disclosure.

Referring now to the drawings, FIG. 1 shows a shifter assembly 10 according to a preferred embodiment of the present invention. The illustrated shifter assembly 10 includes a frame or base 12, a shift lever assembly 14 movable relative to the base 12 over a shift path defining a plurality of gear positions, a knob assembly 16 releasably holding the shift lever assembly 14 in a desired one of a plurality of gear positions against undesired and/or inadvertent movement to the other gear positions, and a locking mechanism 18 for locking the shift lever assembly 14 in a predetermined one of the gear positions against movement to the other gear positions when predetermined conditions are present.

The illustrated base 12 is adapted to be attached to the motor vehicle in a fixed position such as a floor or console. The base 12 is shaped to engage the motor vehicle in a desired manner and is typically provided with openings or holes for receiving mechanical fasteners such as bolts to secure the base to the motor vehicle.

The illustrated shift lever assembly 14 includes a pivot member 20, a shift lever or post 22 for manually moving the pivot member 20. The lower end of the pivot member 20 is sized and shaped to extend between pivot flanges of the base 12 and cooperate with the base 12 to provide a pivotable connection between the pivot member and the base 12. Pivotably connected in this manner, the pivot member 20 is pivotable about a horizontal and laterally extending pivot axis 24 so that shift lever assembly 14 moves over a generally straight shift path extending in the forward-rearward direction. It is noted, however, that the shift path can alternatively have any other suitable shape and/or direction such as, for example, the shift path could alternatively include laterally extending portions.

The illustrated shift lever 22 is generally an elongate tube having a hollow central passage. The lower end of the shift lever 22 is adapted to be secured to the pivot member 20. With the shift lever 22 secured to the pivot member 20, the pivot member 20 can be pivoted about the pivot axis 24 by manually applying a force to the shift lever 22. The upper end of the illustrated shift lever 22 is provided with handle or knob 26. The knob 26 is preferably provided with a shape to provide a suitable gripping surface for the hand of the operator.

The illustrated base 12 has a detent plate or gate 28 having a curvature about the pivot axis 24. The illustrated gate 28 has a lower contoured surface with a plurality of downward facing grooves or notches 30 formed therein. The notches 30 define the various gear positions along the shift path which the shift lever assembly 14 can be moved to provide a desired gear at the transmission of the motor vehicle. The illustrated notches 30 define the gear positions of park (P), reverse (R), neutral (N), drive (D), second low gear (2), and first low gear (1). It is noted, however, that the notches 30 can alternatively define any other suitable plurality of gear positions. The shift lever assembly 14 is operably connected to the transmission of the motor vehicle via mechanical and/or electrical linkages such that movement the shift lever assembly 14 to the various gear positions along the shift path causes the transmission to move to the corresponding gear. The notches 30 are sized and shaped to cooperate with the knob assembly 16 to limit movement of the shift lever assembly 14 as discussed in more detail hereinbelow. The illustrated notches 30 are each rectangular shaped and are sized differently in order to control movement of the shift lever assembly 14 in a desired manner. It is noted that the notches 30 can alternatively have other suitable shapes such as, for example, arcuate and/or can each be sized the same.

The illustrated knob assembly 16 includes the knob 26, a detent member or gate pin 32 movable into and out of engagement with the notches 30, and an actuator 34 for selectively moving the detent member 32. The illustrated knob assembly 16 is secured to the shift lever assembly 14 for movement therewith but alternatively the gate 28 and the gate pin 32 can be reversed. The pivot member 20 forms a guide opening or passage for the detent member 32 so that the detent member 32 is linearly moved by the actuator 34 along a linear path extending toward and away from the notches 30, that is, in a direction substantially perpendicular to the notches 30. The illustrated detent member 32 moves along the central axis of the shift lever assembly 14 and intersects the pivot axis 24. The detent member 32 is sized and shaped to closely cooperate with the guide opening so that the guide opening guides the detent member 32 to maintain movement of the detent member 32 along the linear path. The detent member 32 is also sized and shaped to cooperate with the notches 30 of the gate 28 so that the detent member 32 blocks and limits pivotal movement of the shift lever assembly 14 when the detent member 32 is in one of the notches 30 but permits pivotal movement of the shift lever assembly 14 when the detent member 32 is removed from the notch 30. The engagement portion of the illustrated detent member 32 is generally rectangular to cooperate with the rectangular-shaped notches 30 but any other suitable shape can alternatively be utilized.

The illustrated actuator 34 includes a manually operated button member 36 and a connecting member or rod 38 extending from the button member 36 to the detent member 32. The illustrated button member 36 is pivotably secured to the knob 26 and is provided with an engagement surface sized and shaped for interacting with the connecting rod 38. The illustrated connecting rod 38 extends within the interior passage of the shift lever 22 and is linearly movable along the central axis of the shift lever 22. The lower end of the connecting rod 38 is secured to the detent member 32. The upper end of the connecting rod 38 is sized and shaped to interact with the button member 36 so that manual actuation of the button member 36 in a direction into the knob 26 linearly and downwardly moves the connecting rod 38 and the detent member 32 connected thereto toward the pivot axis 24 and away from the notches 30. A spring member is preferably provided within the shift lever 22 to resiliently bias the connecting rod 38 in an upward direction so that the detent member 32 is resiliently biased toward the notches 30. It is noted that the actuator 34 can alternatively be of any other suitable type such as, for example, an electric linear actuator with a control switch.

The illustrated locking mechanism 18 is positioned at a forward end of the base 12 adjacent the notch 30 defining the park gear position so that the locking mechanism 18 prevents movement of the shift lever assembly 14 out of the park gear position unless a foot brake pedal is depressed and an ignition key is present or activated to reduce the likelihood of unattended or unintended movement or acceleration of the motor vehicle. It is noted that the locking mechanism 18 can alternatively be utilized to secure the shift lever assembly 14 in any other gear position. It is also noted that the locking mechanism 18 can be operated upon the presence of any other suitable predetermined conditions.

As best shown in FIGS. 2 to 4, the locking mechanism 18 includes a stopper member 40 movable between a locking position wherein the stopper member 40 is within the path of the detent member 32 to block movement of the detent member along at least a portion of the path and prevent removal of the detent member 32 from the notch 30 and an unlocking position wherein stopper member 40 is positioned to permit the detent member 32 to move along the path out of the notch 30, a cam member 42 selectively applying a force to the stopper member 40 to move the stopper member 40 toward the unlocking position in response to movement of the detent member 32 along the path under certain predetermined conditions, and an electromagnetic solenoid 44 having a winding or coil 46 fixed or secured to the cam member 42 (to substantially prevent relative movement therebetween) and a movable iron core or plunger 48 fixed or secured to the stopper member 40 (to substantially prevent relative movement therebetween) so that the electromagnetic solenoid 44 permits relative movement between the coil 46 and the core 48 (and thus the cam member 42 and the stopper member 40) when unenergized, and binds or prevents relative movement between the coil 46 and the core 48 (and thus the cam member 42 and the stopper member 40) when energized.

The illustrated stopper or blocker member 40 is movable along a horizontal linear path between a locking or blocking position wherein the stopper member 40 is within a portion of the linear path of the detent member 32 to block movement of the detent member out of the notch 30 defining the park gear position (best shown in FIGS. 2 and 3) and an unlocking or unblocking position wherein stopper member 40 is positioned so that it does not block the linear path of the detent member 32 to permit the detent member 32 to move along the linear path out of the notch 30 defining the park gear position (best shown in FIG. 4). The illustrated stopper member 40 is generally rectangular shaped having substantially planar upper and lower surfaces 50, 52 but any other suitable shape can be utilized. The lower surface 52 engages a planar surface 54 of a fixed mounting bracket or base 56 upon which the stopper member 40 slides between its locking and unlocking positions. The mounting bracket 56 is secured to the base 12 of the shifter assembly 10. The illustrated stopper member 40 has a rear or blocking end portion sized and shaped to block movement of the detent member 32. The illustrated stopper member 40 also has a vertically extending flange 58 near the rear end of the stopper member 40 and forward of the blocking end portion. The flange 58 is sized and shaped to support the plunger 48 of electromagnetic solenoid 44 and secure the plunger 48 to the stopper member 40 for movement therewith as described in more detail hereinafter.

An illustrated first spring member 60 extends between the mounting bracket 56 and a forward end of the stopper member 40 to resiliently bias or urge the stopper member 40 in a rearward direction toward its locking position where a rearward facing abutment of the stopper member 40 engages a stop 61 having a forward facing abutment. The illustrated first spring member 60 is a compression spring that engages a rearward facing side of a forward wall or flange of the mounting bracket 56 and a forward end of the stopper member 40, that is, the end of the stopper member 40 opposite the detent member 32. The illustrated first spring member 60 is a helical coil compression spring but any other suitable type of resilient spring member can alternatively be utilized.

The illustrated cam member 42 is movable along a horizontal linear path and selectively applies a force to the stopper member 40 to move the stopper member 40 in a forward direction toward its unlocking position in response to movement of the detent member 32 when the electromagnetic solenoid 44 binds the cam member 42 to the stopper member 40 as described in more detail hereinafter. The illustrated cam member 42 is generally rectangular shaped having substantially planar upper and lower surfaces 62, 64 but any other suitable shape can be utilized. The lower surface 64 engages the planar upper surface 50 of the stopper member 40 upon which the cam member 42 slides between its camming position wherein it is located within the path of the detent member 32 and uncamming position wherein it is not within the path of the detent member 32. The illustrated cam member 42 has a rear end provided with an angled cam surface 66 sized and shaped to engage the lower end of the detent member 32 and move the cam member 42 from its camming position to its uncamming position in response to the downward movement of the detent member 32. A rear portion of the cam member 42 extends through a slot 68 formed in the stopper member flange 58 to guide the horizontal linear motion of the cam member 42. The illustrated cam member 42 also has a vertically extending flange 70 near its forward end that is sized and shaped to support the coil 46 of electromagnetic solenoid 44 and secure the coil 46 to the cam member 42 for movement therewith as described in more detail hereinafter.

The electromagnet solenoid 44 includes the coil or winding 46 fixed to the cam member 42 and the movable iron core or plunger 48 fixed to the stopper member 40 so that the electromagnet solenoid 44 permits relative movement between the cam member 42 and the stopper member 40 when unenergized and binds or prevents relative movement between the cam member 42 and the stopper member 40 when energized. The illustrated winding or coil 46 is secured to the cam member 42 within the flange 70 of the cam member 42 and includes a central passage 72 through which the plunger 48 extends. The illustrated passage 72 is perpendicular to the path of the detent member 32 and parallel to the direction of movement of the cam member 42 and the stopper member 40. The illustrated iron core or plunger 48 is secured to the stopper member flange 58 in a cantilevered manner and forwardly extends entirely through the passage 72 of the electromagnet coil 46 and beyond the forward end of the cam member 42 and the coil 46. When the electromagnet coil 46 is unenergized, the plunger 48 is free to move through the passage 72 of the coil 46 and thus permits relative movement between the cam member 42 and the stopper member 40. When the electromagnetic coil 46 is energized, however, the coil is driven or pushed in a rearward direction until the cam member 42 engages the stop 75 so that the coil 46 is fixed to the plunger 48 to lock the cam member 42 to the stopper member 40 and prevent relative movement therebetween. The illustrated coil 46 and core 48 operate to drive or push the coil 46 and the cam member 42 in a rearward direction relative to the core 48 so that the cam member 42 engages and is secured to the stopper member 40 but any other suitable operation to bind the cam member 42 and the stopper member 40 can alternatively be utilized.

An illustrated second spring member 74 extends between a forward end of the plunger 48 and a forward side of the coil 46 and the cam member 42 to resiliently bias or urge the cam member 42 in a rearward direction toward its camming position within the path of the detent member 32 where a rearward facing abutment of the cam member 42 engages a stop 75 having a forward facing abutment. The illustrated second spring member 74 is a compression spring that engages a flange 76 at a forward end of the plunger 48 and a forward end of the coil 46 and the cam member 42, that is, the end of the cam member 42 opposite the detent member 32. The plunger flange 76 forms a rearward facing annular-shaped abutment for the second spring member 74. The illustrated second spring member 74 is a helical coil compression spring but any other suitable type of resilient spring member can alternatively be utilized. The illustrated second spring member 74 is generally coaxial with the plunger 48 and encircles a forward end portion of the plunger 48, that is, the end of the plunger 48 on the opposite side of the coil 46 from the connection of the plunger 48 to the stopper member flange 58.

As best shown in FIGS. 1 and 2, the first spring member 60 biases the stopper member 40 to its locking position within the path of the detent member 32 and against the stop 61 and the second spring member 74 biases the cam member 42 to its camming position within the path of the detent member 32 and against the stop 75 when the shift lever assembly 14 is in the park position and the operator is not actuating the knob assembly 16. If the predetermined conditions are not met (for example, the foot brake pedal is not depressed and the key is not in or operating the ignition), the electromagnetic solenoid 44 is unenergized so that the cam member 42 and coil 46 are free to move relative to the plunger 48 and the stopper member 40 against the bias of the second spring member 74. As best shown in FIG. 3, if the operator actuates the knob assembly 16 to move the shift lever assembly 14 while the electromagnetic solenoid 44 is unenergized, the detent member 32 engages the camming surface 66 of the cam member 42 and forwardly moves the cam member 42 out of its path against the bias of the second spring member 74 and engages the stopper member 40. The engagement with the stopper member 40 prevents further downward movement of the detent member 32 along its linear path so that the detent member 32 cannot be removed from the park gear notch 30. Thus, the operator cannot remove the shift lever assembly 14 from the park gear position. If the predetermined conditions are met (for example, the foot brake pedal is depressed and the key is in or operating the ignition), the electromagnetic solenoid 44 is energized so that the cam member 42 and the coil 46 are fixed or bound to the plunger 48 and the stopper member 40. As best shown in FIG. 4, if the operator actuates the knob assembly 16 to move the shift lever assembly 14 while the electromagnetic solenoid is energized, the detent member 32 engages the camming surface 66 of the cam member 42 and forwardly moves the cam member 42 and the stopper member 40 secured thereto out of its path against the bias of the first spring member 60. With both the cam member 42 and the stopper member 40 out of its path, the detent member 32 can move along its linear path so that the detent member 32 is removed from the park gear notch 30. With the detent member 32 out of the park gear notch 30, the operator can move the shift lever assembly 14 from the park gear position to another desired gear position.

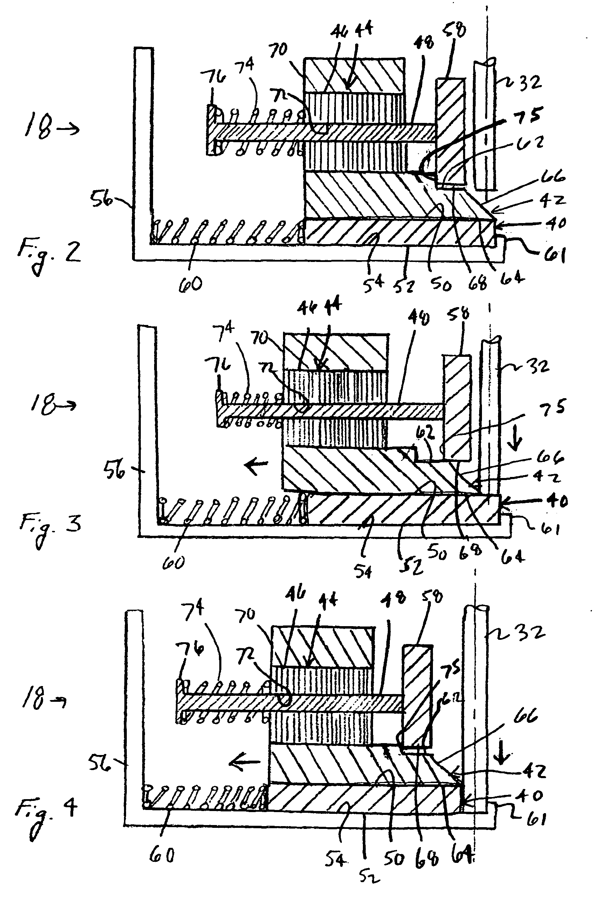

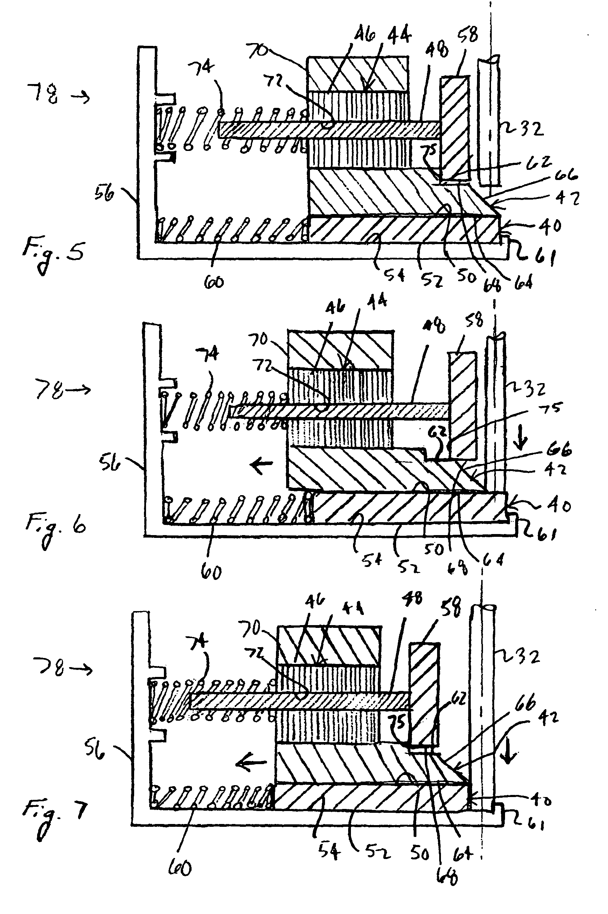

FIGS. 5 to 7 illustrate a locking mechanism 78 according to a second embodiment of the present invention wherein like reference numbers are utilized to indicate like structure. The locking mechanism 78 according to the second embodiment is substantially the same as the locking mechanism 18 according to the first embodiment except for the structure of the second spring member 74. The illustrated second spring member 74 extends between a forward end of the mounting bracket 56 and a forward side of the coil 46 and the cam member 42 to resiliently bias or urge the cam member 42 in a rearward direction toward its camming position within the path of the detent member 32 and against the stop 75. With the second spring member acting on the mounting bracket 56 rather than the plunger 48 or stopper member 40, the first spring member 60 and the second spring member 74 act in parallel rather than in series. With the spring members 60, 74 acting in parallel, the need to balance forces is eliminated.

FIGS. 8 to 10 illustrate a locking mechanism 80 according to a third embodiment of the present invention wherein like reference numbers are utilized to indicate like structure. The locking mechanism 80 according to the third embodiment is substantially the same as the locking mechanisms 18, 78 according to the first and second embodiments except for the operation of the second spring member 74. The illustrated second spring member 74 extends between a forward end of the flange 58 of the stopper member 40 and a rearward side of the coil 46 and the cam member 42 to resiliently bias or urge the cam member 42 in a forward direction away from its camming position within the path of the detent member 32 and against the stop 75. The illustrated stop 75 is modified so that it includes a rearward facing abutment as well as a forward facing abutment to cooperate with forward and rearward facing abutments of the cam member 42 to limit relative movement of the cam member 40 relative to the stopper member 40 in both directions. When the cam member 42 moves in a forward direction relative to the stopper member 40 due to the bias of the second spring member 74, the forward facing abutment of the cam member 42 engages the rearward facing abutment of the stopper member stop 75. When the cam member 42 moves in a rearward direction relative to the stopper member 40 due to energization of the electromagnetic solenoid 44, the rearward facing abutment of the cam member 42 engages the forward facing abutment of the stopper member stop 75. It is noted that the second spring member 74 can alternatively act between the base 56 and the coil 46 and the cam member 42 as shown in the second embodiment to resiliently bias or urge the cam member 42 in a forward direction away from its camming position within the path of the detent member 32 and against the stop 75 as shown in the third embodiment. It is also noted that the positions of the coil 46 and core 48 can alternatively be reversed in this second embodiment, that is, the coil fixed to the stopper member 40 and the core 48 fixed to the cam member 42.

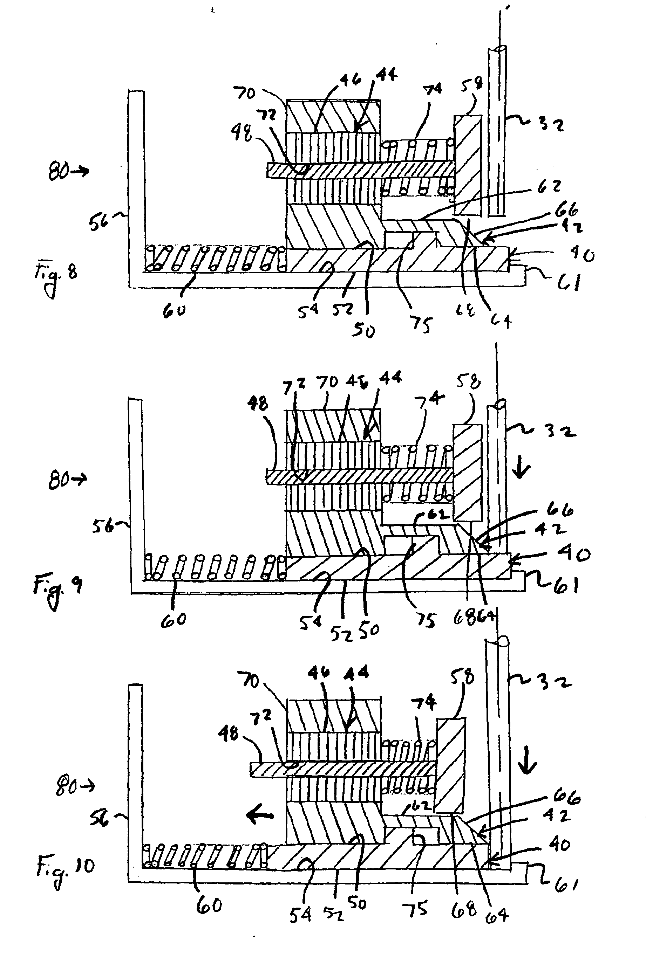

As best shown in FIGS. 8 and 9, the first spring member 60 biases the stopper member 40 to its locking position within the path of the detent member 32 and against the stop 61 and the second spring member 74 forwardly biases the cam member 42 to its uncamming position out the path of the detent member 32 and against the rearward facing abutment of the stop 75 when the shift lever assembly 14 is in the park position and the operator is not actuating the knob assembly 16. If the predetermined conditions are not met (for example, the foot brake pedal is not depressed and the key is not in or operating the ignition), the electromagnetic solenoid 44 is unenergized so that the cam member 42 and coil 46 are free to move relative to the plunger 48 and the stopper member 40 against the bias of the second spring member 74. As best shown in FIG. 9, if the operator actuates the knob assembly 16 to move the shift lever assembly 14 while the electromagnetic solenoid 44 is unenergized, the detent member 32 engages the stopper member 40. The engagement with the stopper member 40 prevents further downward movement of the detent member 32 along its linear path so that the detent member 32 cannot be removed from the park gear notch 30. Thus, the operator cannot remove the shift lever assembly 14 from the park gear position. If the predetermined conditions are met (for example, the foot brake pedal is depressed and the key is in or operating the ignition), the electromagnetic solenoid 44 is energized so that the cam member 42 and the coil 46 are driven in a rearward direction toward the camming position and are fixed or bound to the plunger 48 and the stopper member 40. As best shown in FIG. 10, if the operator actuates the knob assembly 16 to move the shift lever assembly 14 while the electromagnetic solenoid is energized, the detent member 32 engages the camming surface 66 of the cam member 42 and forwardly moves the cam member 42 and the stopper member 40 secured thereto out of its path against the bias of the first spring member 60. With both the cam member 42 and the stopper member 40 out of its path, the detent member 32 can move along its linear path so that the detent member 32 is removed from the park gear notch 30. With the detent member 32 out of the park gear notch 30, the operator can move the shift lever assembly 14 from the park gear position to another desired gear position.

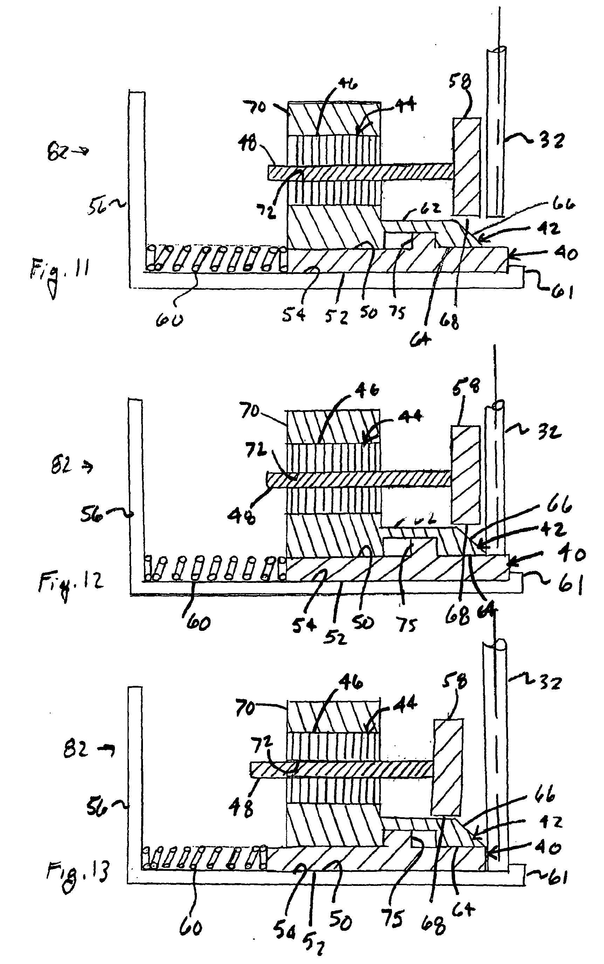

FIGS. 11 to 13 illustrate a locking mechanism 82 according to a fourth embodiment of the present invention wherein like reference numbers are utilized to indicate like structure. The locking mechanism 82 according to the fourth embodiment is substantially the same as the locking mechanisms 18, 78, 80 according to the first to third embodiments except that the second spring member 74 is eliminated. With the second spring member 74 eliminated, the coil 46 and the cam member 42 "floats" relative to the core 48 and the stopper member 40 between the limits formed by the abutments and the stop 75 when the electromagnetic solenoid 44 is unenergized. That is, the coil 46 and the cam member 42 is unbiased by any spring forces and thus is free to move in ether direction relative to the core 48 and the stopper member 40 when any forces are applied thereto and the electromagnetic solenoid 44 is unenergized.

As best shown in FIGS. 11 and 12, the first spring member 60 biases the stopper member 40 to its locking position within the path of the detent member 32 and against the stop 61 and the cam member 42 is free to move between its uncamming position and its camming position when the shift lever assembly 14 is in the park position and the operator is not actuating the knob assembly 16. If the predetermined conditions are not met (for example, the foot brake pedal is not depressed and the key is not in or operating the ignition), the electromagnetic solenoid 44 is unenergized so that the cam member 42 and coil 46 are free to move relative to the plunger 48 and the stopper member 40 against the bias of the second spring member 74. As best shown in FIG. 12, if the operator actuates the knob assembly 16 to move the shift lever assembly 14 while the electromagnetic solenoid 44 is unenergized, the detent member 32 engages the stopper member 40. The engagement with the stopper member 40 prevents further downward movement of the detent member 32 along its linear path so that the detent member 32 cannot be removed from the park gear notch 30. Thus, the operator cannot remove the shift lever assembly 14 from the park gear position. If the cam member is in its camming position, the detent member 32 engages the camming surface 66 of the cam member 42 and forwardly moves the cam member 42 out of its path against the bias of the second spring member 74 and engages the stopper member 40 as described above with reference to the first and second embodiments. If the predetermined conditions are met (for example, the foot brake pedal is depressed and the key is in or operating the ignition), the electromagnetic solenoid 44 is energized so that the cam member 42 and the coil 46 are driven in a rearward direction toward the camming position and are fixed or bound to the plunger 48 and the stopper member 40. As best shown in FIG. 13, if the operator actuates the knob assembly 16 to move the shift lever assembly 14 while the electromagnetic solenoid is energized, the detent member 32 engages the camming surface 66 of the cam member 42 and forwardly moves the cam member 42 and the stopper member 40 secured thereto out of its path against the bias of the first spring member 60. With both the cam member 42 and the stopper member 40 out of its path, the detent member 32 can move along its linear path so that the detent member 32 is removed from the park gear notch 30. With the detent member 32 out of the park gear notch 30, the operator can move the shift lever assembly 14 from the park gear position to another desired gear position.

It is noted that each of the features of the various disclosed embodiments can be utilized with any of the other disclosed embodiments. From the foregoing disclosure and detailed description of certain preferred embodiments, it is apparent that the present invention provides devices that reduce size, weight, and cost while retaining and/or obtaining the desirable characteristics of relatively low noise and a relatively small package size.

From the foregoing disclosure and detailed description of certain preferred embodiments, it is also apparent that various modifications, additions and other alternative embodiments are possible without departing from the true scope and spirit of the present invention. The embodiments discussed were chosen and described to provide the best illustration of the principles of the present invention and its practical application to thereby enable one of ordinary skill in the art to utilize the invention in various embodiments and with various modifications as are suited to the particular use contemplated. All such modifications and variations are within the scope of the present invention as determined by the appended claims when interpreted in accordance with the benefit to which they are fairly, legally, and equitably entitled.

## Claims

1. A locking mechanism for a shift lever, said locking mechanism comprising, in combination:
a detent member movable along a predetermined path;
a stopper member movable between a locking position wherein the stopper member is within the path of the detent member to block movement of the detent member along at least a portion of the path and an unlocking position wherein stopper member is positioned to permit the detent member to move along the path;
a spring member resiliently biasing the stopper member toward the locking position;
a cam member;
an electromagnetic solenoid having a coil fixed to the cam member and a core fixed to the stopper member;
wherein the electromagnetic solenoid permits relative movement between the stopper member and the cam member when the electromagnetic solenoid is unenergized and prevents relative movement between the stopper member and the cam member when the electromagnetic solenoid is energized; and
wherein the cam member applies a force to the stopper member to move the stopper member toward the unlocking position in response to movement of the detent member along the path when the electromagnetic solenoid is energized.

2. The locking mechanism according to claim 1, wherein said stopper member and the cam member are movable relative to a base and the spring member acts between the base and the stopper member.

3. The locking mechanism according to claim 1, further comprising another spring member resiliently biasing the cam member.

4. The locking mechanism according to claim 3, wherein said another spring member encircles a portion of the core.

5. The locking mechanism according to claim 3, wherein said another spring member acts between the core and the cam member.

6. The locking mechanism according to claim 5, wherein said another spring member encircles a portion of the core.

7. The locking mechanism according to claim 3, wherein said another spring member acts between the stopper member and the cam member.

8. The locking mechanism according to claim 7, wherein said another spring member encircles a portion of the core.

9. The locking mechanism according to claim 3, wherein said another spring member biases the cam member toward the path.

10. The locking mechanism according to claim 3, wherein said another spring member biases the cam member away from the path.

11. The locking mechanism according to claim 3, wherein said stopper member and the cam member are movable relative to a base and the another spring member acts between the base and the cam member.

12. The locking mechanism according to claim 1, wherein said electromagnet drives the cam member relative to the stopper member in a direction toward the path when the electromagnetic solenoid is energized.

13. A locking mechanism for a shift lever comprising, in combination:
a detent member movable along a predetermined path;
a stopper member movable between a locking position wherein the stopper member is within the path of the detent member to block movement of the detent member along at least a portion of the path and an unlocking position wherein stopper member is positioned to permit the detent member to move along the path;
a first spring member resiliently biasing the stopper member toward the locking position;
a cam member;
a second spring member resiliently biasing the cam member away from the path;
an electromagnetic solenoid having a coil and a core connecting the stopper member and the cam member;
wherein the electromagnetic solenoid permits relative movement between the stopper member and the cam member when the electromagnetic solenoid is unenergized and prevents relative movement between the stopper member and the cam member when the electromagnetic solenoid is energized; and
wherein the cam member applies a force to the stopper member to move the stopper member toward the unlocking position in response to movement of the detent member along the path when the electromagnetic solenoid is energized.

14. The locking mechanism according to claim 13, wherein said stopper member and the cam member are movable relative to a base and the first spring member acts between the base and the stopper member.

15. The locking mechanism according to claim 13, wherein said electromagnetic solenoid drives the cam member relative to the stopper member in a direction toward the path when the electromagnetic solenoid is energized.

16. The locking mechanism according to claim 13, wherein said coil is fixed to the cam member and said core is fixed to the stopper member.

17. A locking mechanism for a shift lever comprising, in combination:
a detent member movable along a predetermined path;
a stopper member movable between a locking position wherein the stopper member is within the path of the detent member to block movement of the detent member along at least a portion of the path and an unlocking position wherein stopper member is positioned to permit the detent member to move along the path;
a spring member resiliently biasing the stopper member toward the locking position;
a cam member;
an electromagnetic solenoid having a coil and a core connecting the stopper member and the cam member;
wherein the cam member is unbiased by a spring member so that the cam member freely moves relative to the stopper member when the electromagnetic solenoid is unenergized;
wherein the electromagnetic solenoid prevents relative movement between the stopper member and the cam member when the electromagnetic solenoid is energized; and
wherein the cam member applies a force to the stopper member to move the stopper member toward the unlocking position in response to movement of the detent member along the path when the electromagnetic solenoid is energized.

18. The locking mechanism according to claim 17, wherein said stopper member and the cam member are movable relative to a base and the spring member acts between the base and the stopper member.

19. The locking mechanism according to claim 17, wherein said electromagnet drives the cam member relative to the stopper member in a direction toward the path when the electromagnet is electromagnetic solenoid.

20. The locking mechanism according to claim 17, wherein said coil is fixed to the cam member and said core is fixed to the stopper member.
